# EUROPÄISCHE PATENTANMELDUNG

(11) **EP 1 095 994 A2**
(43) Veröffentlichungstag der Anmeldung: **02.05.2001**
(21) Anmeldenummer: 00122118.3
(22) Anmeldetag: 12.10.2000
(51) Int. Cl.: C09J 7/02

(54) **Klebeband und dessen Verwendung zur Abdeckung von Fensterflanschen**

(30) Priorität: 29.10.1999 DE 19952211
(71) Anmelder: Beiersdorf AG, 20245 Hamburg (DE)
(72) Erfinder: Böhm, Nicolai, Dr., 20257 Hamburg (DE); Krupke, Siegfried, 25463 Tornesch (DE); Cohrs, Erika, 22529 Hamburg (DE)

(57) **Zusammenfassung**

Einseitig mit einer Selbstklebemasse ausgerüstetes Klebeband, umfassend ein Trägermaterial aus einem Laminat aus Weich-PVC und Polyester, wobei das Laminat mit Hilfe eines Kaschierklebers auf Acrylsäurepolymerisatbasis hergestellt wird.

## Beschreibung

Die Erfindung betrifft ein Klebeband insbesondere zur Abdeckung von Fensterflanschen insbesondere in Automobilrohkarosserien, die mit kathodischem Tauchlack (KTL) beschichtet sind. Das Klebeband soll die Fensterflansche bei den nachfolgenden Lackier- und Einbrennprozessen vor dem Überlackieren derartig schützen, daß nach dem Abziehen des Klebebandes auf den füller- und decklack-freien Fensterflansch eine Automobilglasscheibe mit einem reaktiven PU-Scheibenkleber eingeklebt werden kann.

Automobilglasscheiben werden herkömmlich mit Gummidichtungen in der fertig lackierten Fahrzeugkarosserie fixiert. Dieses Verfahren wurde in den letzten Jahren zunehmend durch das Einkleben der Scheiben mit Reaktivklebstoffen (zum Beispiel auf Polyurethanbasis) ersetzt. Dabei wird die Scheibe mit dem Kleber bestrichen und so auf die Karosserie aufgesetzt, daß die Kleberaupe auf den Fensterflansch aufgedrückt wird.

Die eingeklebten Scheiben, insbesondere die Windschutzscheiben, dienen heute als versteifendes Element der Karosserie. Im Extremfall vermeiden sie bei einem Überschlag des Fahrzeugs das Einknicken der Dachsäulen. Daher ist eine ausreichende Verklebungsfestigkeit für die Unfallsicherheit eines modernen Kraftfahrzeugs maßgeblich.

Moderne Autolacke bestehen aus diversen Schichten, die auf das geprimerte Karosseriemetall in folgender Reihenfolge aufgebracht werden (schematisiert):
- elektrophoretischer Tauchlack, meist kathodischer Tauchlack (KTL)
- Füller- oder Funktionsschicht
- Farblack
- Decklack

Nach Römpp Lexikon Chemie (Version 1.5, Stuttgart/New York: Georg Thieme Verlag 1998) stellt die elektrophoretische Lackierung (Elektrotauchlackierung) ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als 2. Elektrode.
Die abgeschiedene Lackmenge ist der zugeführten Strommenge direkt proportional. Die elektrophoretische Lackierung wird besonders zur Grundierung, zum Beispiel in der Automobilindustrie eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (sogenannte elektrostatische Lackierung).

Wird die Automobilscheibe nach abgeschlossenem Lackiervorgang auf den mitlackierten Fensterflansch geklebt, sind folgende Nachteile gegeben.
Da der Scheibenkleber auf den Decklack als Haftgrund abgestimmt sein muß, kann sich bei der Vielzahl der bei einem Hersteller verwendeten Decklacke eine unnötig hohe Komplexität ergeben, weil eine Vielzahl von passenden Klebern bereit gehalten werden muß. Wichtiger ist jedoch die Tatsache, daß die Gesamtverklebungsfestigkeit der Automobilscheibe von der schwächsten Stelle im vielschichtigen Lackaufbau abhängt und damit weit geringer sein kann als die Verklebungsfestigkeit des Klebers auf dem Decklack.

Es ist daher vorteilhaft, die Scheibe auf die unterste Lackschicht, die KTL-Schicht, aufzubringen. Die Zahl der verwendeten KTL-Präparate bei einem Hersteller ist üblicherweise geringer als die der Decklacke. Zum einen liegen damit wenige definierte Haftgründe für den Scheibenkleber vor, und zum anderen birgt der Aufbau geprimertes Metall/KTL/Scheibenkleber mit zwei Grenzschichten eine geringere Gefahr des Bruches als ein komplexer Gesamtlackaufbau.

Zum Abdecken des Fensterflansches nach der Aufbringung des KTL läßt sich ein PVC-Plastisol verwenden, wie es in der EP 0 655 989 B1 beschrieben ist. Dieses wird in flüssiger Form auf den Fensterflansch aufgebracht, überlackiert und geliert während der Einbrennphase bei Temperaturen von mindestens 163 °C zu einem festen Film aus. Nachteilig an diesem Verfahren ist, daß für das Demaskieren nach erfolgtem Einbrennen ein 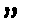 Anfasser" mechanisch freigelegt werden muß, bei dem leicht auch der KTL verletzt werden kann, was die Gefahr nachfolgender Korrosion birgt.
Der Plastisolstreifen kreuzt an den Fensterflanschen zum Teil mehrfach PVC-Nahtabdichtungen, die Schweißnähte auffüllen. Beim Ausgelieren werden häufig starke Verklebungen zwischen Nahtabdichtungen und PVC-Plastisol Fensterflanschabdeckung beobachtet, die eine problemlose Demaskierung verhindern. Ebenfalls zu beobachten sind plastisolbedingte Kontaminationen des Haftgrundes derart, daß sich ein Adhäsionsversagen an der Grenze zwischen Scheibenkleber und ehemals plastisolmaskiertem KTL zeigt.
Die geforderte Verklebungssicherheit der Scheibe ist so nicht gewährleistet.
Diesem kann zwar durch Einsatz eines Primers entgegengewirkt werden, doch ist dieser Schritt arbeitsintensiv, führt zu unerwünschten Lösungsmittelemissionen und kann durch versehentliches Verspritzen oder Tropfen auf dem Decklack Lackreparaturen nötig machen.

Eine vorteilhaftere Möglichkeit der Maskierung von Fensterflanschen ist die Verwendung von Klebebändern. Seit mehreren Jahren wird die Maskierung mit einem Naturkautschukkleber-laminierten PVC-Polyester-Laminat-Verbund, selbstklebend ausgerüstet mit einer Naturkautschukklebemasse, praktiziert. Dieses wird analog der Plastisolraupe vor dem Füllern und Lackieren auf den KTL-beschichteten Fensterflansch geklebt und nach erfolgtem Einbrennen mitsamt den darauf aufgebrachten Lackschichten abgezogen. Die Applikation ist von Hand, aber auch automatisiert per Roboter möglich. Der Hauptnachteil dieses letztgenannten Produkts ist die Fehlerhäufigkeit bei der Demaskierung, da das Laminat zum vollflächigen und partiellen Spleißen sowie zum Reißen neigt. Insbesondere das partielle Spleißen stellt ein Sicherheitsrisiko dar, weil sich der Polyesterfilm, der auf dem Fensterflansch verbleibt, farblich nur wenig vom KTL abhebt und daher leicht übersehen werden kann. Diese Polyesterreste sind ein gänzlich ungeeignetes Haftmedium für Scheibenkleber und können so zu mangelnder Scheibenhaftung führen. Vorteilhaft gegenüber dem Plastisol ist hingegen die deutlich geringere Schichtdicke von 100 bis 200 µm, die entsprechend weniger Abfallgewicht pro maskiertem Fahrzeug ergibt.

Aufgabe der Erfindung ist es, ein Klebeband insbesondere zur Fensterflanschabdeckung mit einem Trägermaterial zu entwickeln, das die Nachteile des Standes der Technik nicht oder nicht in dem Maße zeigt. Insbesondere soll das Klebeband die Fensterflansche derartig schützen, daß nach dem Abziehen des Klebebandes auf den Fensterflansch insbesondere eine Automobilglasscheibe mit einem reaktiven PU-Scheibenkleber eingeklebt werden kann.

Gelöst wird diese Aufgabe durch ein Klebeband, wie es im Hauptanspruch niedergelegt ist. Gegenstand der Unteransprüche sind dabei vorteilhafte Weiterbildungen des Klebebands.

Grundsätzlich geeignet als Trägermaterialien für ein Klebeband, das die für dieses Einsatzgebiet typischen hohen Temperaturen von bis zu 180 °C über ca. 30 min. überstehen muß, sind Folien aus Polyester (Polyethylenterephthalat PET, Polyethylennaphtalat PEN) oder Weich-PVC, aber auch faserige Materialien wie Baumwoll-, aromatische Polyamid und Polyestergewebe oder Vliese. Nachteilig an Fasermaterialien ist die ihnen eigene geringe Dehnbarkeit, was sich erschwerend auf die Verklebbarkeit in Kurven auswirkt.

Soll das Band per Roboter verarbeitet werden, wird es mit starken Zugkräften beaufschlagt und muß daher zur Vermeidung einer Vordehnung, die in der Wärme zu einer hohen Rückstellspannung führt, über einen großen Zugmodul verfügen.

Die Anforderung an hohe Zugfestigkeit bei gleichzeitiger Temperaturresistenz über etliche Minuten leisten biaxial gereckte PET- oder PEN-Folien mit einem Reckverhältnis längs zu quer von ca. 3-4 zu 3-4. Problematisch an gereckten Polyesterfolien ist allerdings die geringe Weiterreißfestigkeit, sobald die Folienkante minimal verletzt ist. Da mit dem Abziehen des überlackierten Klebebandes der mehrschichtige Lackfilm aufgerissen wird und dieser stets eine geringfügig gezackte Kante aufweist, kommt es beim Abziehen einer reinen Polyesterfolie sehr häufig zum Reißen des Klebebandes.
Eine Weich-PVC-Folie ist für die Roboterapplikation wegen ihres geringen Zugmoduls weniger geeignet. Die Vorspannung führt je nach Scherfestigkeit der Klebmasse zu einem Schrumpf in der Hitze und kann sogar zum Aufstellen des Klebebandes in den Kurven führen. Weich-PVC besitzt dafür eine große Weiterreißfestigkeit bei gleichzeitiger Flexibilität, vor allem in Dicken von 70 bis 150 µm, und bildet einen guten Haftgrund für aufgetragene Lackschichten.

Ein Laminat aus Weich-PVC und Polyester als Trägermaterial erweist sich für ein Klebeband als hervorragend geeignet, die gestellten Aufgaben zu lösen, weil das Laminat die Vorzüge der beiden Materialien vereinigt.
Dabei spielt es keine wesentliche Rolle, ob das Weich-PVC die Außenseite des Klebebandes bildet oder das Polyester.
Bildet das Polyester die Außenseite, ist eine Rückseitenbeschichtung mit geeigneten Substanzen empfehlenswert, um ein Absplittern der Lackschichten und somit die Verschmutzung der Fahrzeugoberfläche, insbesondere des Fensterflansches zu verhindern, weil die Füller- und Lackhaftung auf Polyester gering ist.

Voraussetzung dafür, daß das Laminat seine Vorteile ausspielen kann, ist die Verbundfestigkeit. Ist diese nicht ausreichend, kann eine minimale Verletzung des Polyesters zum Reißen und Delaminieren führen. Liegt die Polyesterschicht unten, können zusätzlich Polyesterreste auf dem Fensterflansch verbleiben und, wie bereits erwähnt, die Verklebungssicherheit der Automobilscheibe gefährden, wenn dieser Fehler nicht erkannt wird.

Als Kaschierkleber für das Laminat aus Weich-PVC und PET sind, wie bereits bekannt, beispielsweise solche aus Naturkautschuk verwendbar. Um die Verbundfestigkeit des Klebebands zu erhöhen, werden Primer zwischen Laminat und Selbstklebemasse eingesetzt, die die Anbindung der Naturkautschukklebemasse auf der Polyesterseite beispielsweise durch Kautschuk/Isocyanat-Mischungen signifikant verbessern. Der Produktaufbau ist somit eher aufwendig und komplex in der Herstellung. Ein derartiges Klebeband mag in gewissen Anwendungsfällen durchaus vorteilhaft sein, jedoch leidet die Naturkautschukmasse und damit die Verbundfestigkeit unter harten Anwendungsbedingungen, wie sie in der Praxis häufig auftreten (30 min bei 180°C). Reißen und Delaminieren werden dann häufig beobachtet.

Überraschend und für den Fachmann nicht vorhersehbar kann eine sehr viel beständigere Verbindung des Weich-PVC/PET-Laminats mit einem Kaschierkleber aus einem hochmolekularen, kohäsiven Acrylsäureesterpolymerisat geschaffen werden. Geeignete Monomere sind beispielsweise n-Butylacrylat, t-Butylacrylat, 2-Ethylhexylacrylat, Methylacrylat und Acrylsäure in verschiedenen Kombinationen und Mengenverhältnissen. Klebharze wie Kolophoniumderivate oder Terpenphenolharze können die Eignung als Kaschierklebmasse durch Erhöhung der Klebkraft noch verbessern. Eine Primerung der Laminatbestandteile ist nicht notwendig.

Als weitere sehr vorteilhafte Form der Verbundherstellung erweist sich die Laminierung durch Hitzeeinwirkung. Während sich biaxial gereckte PET-Folien mit PVC nicht durch bloße Hitze, kombiniert mit Druckeinwirkung, verbinden, lassen sich geprimerte und mit PVC heißsiegelfähige PET-Folien, wie zum Beispiel Melinex von DuPont, Middlesborough, Großbritannien, bei 140 °C bis 200 °C zu einem Laminat verschweißen, das erstaunlicherweise die applikationstypischen Temperaturen von bis zu 180 °C übersteht, obwohl diese Temperatur bereits die Kaschierung aufweichen läßt.

Als Selbstklebemasse für das Klebeband eignen sich prinzipiell alle druckempfindlichen Klebmassen, die die geforderte Temperaturstabilität über ca. 30 min bei 180 °C aufweisen und die bei diesen Temperaturen eine ausreichende Scherfestigkeit haben, um der Schrumpfneigung des Trägermaterials zu widerstehen, zum Beispiel alle vernetzbaren Naturkautschuk-, Synthesekautschuk und Acrylatklebmassen, die über eine anwendungsgerechte Klebkraft von über 2 N/cm auf KTL-Untergründen verfügen.

Eine vorteilhafte Ausführungsform der Selbstklebemasse basiert auf einem Copolymer aus Ethylen, Vinylacetat, Acrylsäureester und gegebenenfalls Acrylsäureamid. Ein solches Copolymer wird in der EP 0 017 986 A1 beschrieben.

Überraschend und für den Fachmann nicht vorhersehbar erweisen sich derartige Synthesekautschuke basierend auf den Monomeren Ethylen (E), Vinylacetat (VA) Acrylsäureestern (Ac) und Acrylsäureamiden (Acam), wie sie zum Beispiel von Air Products Polymers, Burghausen, Deutschland als Dispersionen vertrieben werden, für diese Anwendung als geeignete Klebemasse.

In einer bevorzugten Ausführungsform weist die Selbstklebemasse die folgende Zusammensetzung auf:
- Ethylen: 10 bis 30, besonders bevorzugt 10 bis 15 Gew.-%
- Vinylacetat: 20 bis 55, besonders bevorzugt 30 bis 35 Gew.-%
- Acrylsäureester: 30 bis 69, besonders bevorzugt 50 bis 60 Gew.-%
- Acrylsäureamid: 0 bis 8, besonders bevorzugt 0,5 Gew.-%

Die Selbstklebemasse kann auf den Träger in gelöster oder Dispersionsform aufgetragen werden, so daß nach dem Trocknen in der Wärme ein Klebefilm von vorzugsweise 15 bis 40 µm Dicke resultiert.

Je nach Affinität der Klebmasse zur Unterseite des Trägers kann ein Primer gewählt werden, um eine sichere Masseverankerung zu gewährleisten.

Weiter vorteilhaft kann auf der Rückseite des Trägermaterials ein Trennlack zur leichten Abrollbarkeit vorhanden sein, nämlich dann, wenn die Masse gut auf der Rückseite haftet. Der Trennlack empfiehlt sich insbesondere, wenn das Material ohne Trennmedium zur Rolle gewickelt werden soll. Gleichzeitig muß er eine sichere Füller- und Lackhaftung gewährleisten.

Besonders kommen die Vorteile des erfindungsgemäßen Kiebebands zum Tragen, wenn dieses im Automobilbau eingesetzt wird. Nachfolgend wird ausführlich dieser Anwendungsfall geschildert, der nur beispielhaft für ähnliche Anwendungen ausgewählt ist.

Das Klebeband mit dem nach dem vorgeschlagenen Verfahren kaschierten Träger aus Weich-PVC und PET wird nach dem Elektrotauchlackiervorgang der Karosserie, in dem die KTL-Schicht auf die geprimerte Rohkarosserie aufgebracht wird, und nach dem Einbrennen der KTL-Schicht, bei dem der reaktive Roh-KTL durch thermische Einwirkung vernetzt wird, auf den Fensterflansch bevorzugt in 10 bis 25 mm Breite aufgeklebt. Dabei muß das Band um die Kurven herum gedehnt werden, damit kein Sprühnebel der nachfolgenden Lackierschritte unter etwaige Falten gelangen kann. Das Band verbleibt solange auf der Karosserie, bis alle Lackierschritte vollzogen sind. Nach Abkühlen der Karosserie kann das Band dann mitsamt den darauf haftenden Lackschichten ohne Reißen, Delaminieren und Rückstände des Klebebandes abgezogen werden. Die KTL-Spur, die nach dem Demaskieren zurückbleibt, bietet einen sicheren Haftgrund für die Verklebung von Automobilscheiben mit Hilfe von wassersensitiven Reaktivklebstoffen auf Polyurethanbasis.

Das erfindungsgemäße Klebeband wird nachfolgend in bevorzugter Ausführung anhand mehrerer Beispiele beschrieben, ohne damit die Erfindung in irgendeiner Weise beschränken zu wollen. Des weiteren sind Vergleichsbeispiele aufgeführt, in denen untaugliche Klebebänder dargestellt sind.

### Beispiele

### Beispiel 1

Eine 25 µm dicke PET-Folienbahn wurde mit einer Lösung bestrichen, die 33 Gewichtsprozent Feststoffgehalt hatte. Den Feststoff bildeten 65 Gewichtsprozent eines Polymerisates aus 40 Teilen Butylacrylat, 50 Teilen 2-Ethylhexylacrylat, 5 Teilen Methylacrylat und 5 Teilen Acrylsäure sowie 35 Gewichtsprozent Terpenphenolharz. Die Strichstärke wurde so gewählt, daß nach dem Trocknen in der Wärme ein Klebfilm von 20 µm Dicke resultierte.

Unmittelbar nach dem Trocknen vor der Aufwicklung der Folienbahn wurde eine Weich-PVC Folie von 90 µm Dicke zugeführt und zwischen zwei Kaschierwalzen unter hohem Druck faltenfrei fest angewalzt. Wurden die beiden Folien an einer Zugprüfmaschine im Winkel von 90° bei einer Geschwindigkeit von 300 mm/min auseinandergezogen, ergab sich eine Delaminierfestigkeit von 8,5 N/cm.

Diese Folie wurde auf der PET-Seite mit einer Lösung aus 2 Teilen Naturkautschuk in Toluol, die mit 1 Teil Diphenylmethandiisocyanat gemischt worden war, geprimert und nach dem Trocknen mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 2

Eine 20 µm dicke PET-Folienbahn mit einer coextrudierten, auf PVC heißsiegelfähigen Schicht (Melinex 301, DuPont, Middlesborough, UK) wurde zusammen mit einer Weich-PVC Folie von 90 µm Dicke zwischen zwei Kaschierwalzen bei 180 °C unter hohem Druck faltenfrei verschmolzen. Die beiden Folien waren mechanisch nicht mehr voneinander zu trennen, so daß die Delaminationskraft nicht gemessen werden konnte.

Dieses Laminat wurde auf der PET-Seite mit einer Lösung aus 2 Teilen Naturkautschuk in Toluol, die mit 1 Teil Diphenylmethandiisocyanat gemischt worden war, geprimert und nach dem Trocknen mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 3

Das Laminat wurde hergestellt wie in Beispiel 1. Die Folie wurde auf der PVC-Seite mit einer Nitrilkautschuk/Naturkautschuklösung geprimert und nach dem Trocknen mit einer Naturkautschukklebemasse nachgestrichen. Die PET-Rückseite wurde mit einer Polyvinylidendichlorid-Lösung lackiert und getrocknet.
Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet. Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Vergleichsbeispiel 4

Eine 25 µm dicke PET-Folienbahn wurde mit einer Lösung aus 2 Teilen Naturkautschuk in Toluol, die mit 1 Teil Diphenylmethandiisocyanat gemischt worden war, geprimert und nach dem Trocknen mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband riß beim Abziehen mehrfach von der Kante ausgehend ab. Beim Abziehen splitterte der Lack zum Teil von der Rückseite des Bandes ab.

### Vergleichsbeispiel 5

Eine 25 µm dicke PET-Folienbahn wurde beidseitig mit einer Lösung aus 2 Teilen Naturkautschuk in Toluol, die mit 1 Teil Diphenylmethandiisocyanat gemischt worden war, geprimert.
Eine Weich-PVC Folie von 90 µm Dicke, die zuvor mit einer Nitrilkautschuk/Naturkautschuklösung geprimert worden war, wurde mit einer Lösung einer Naturkautschukklebemasse in Benzin mit 30 Gewichtsprozent Feststoffgehalt bestrichen. Diese bestand aus 50 Teilen Naturkautschuk, 10 Teilen Zinkoxid, 3 Teilen Kolophoniumharz, 6 Teilen Alkylphenolharz, 17 Teilen Terpenphenolharz, 12 Teilen Poly-β-Pinenharz und 2 Teilen Goldöl. Die Strichstärke wurde so gewählt, daß nach dem Trocknen in der Wärme ein Klebfilm von 30 µm Dicke resultierte.

Unmittelbar nach dem Trocknen vor der Aufwicklung der Folienbahn wurde die geprimerte PET-Folie zugeführt und zwischen zwei Kaschierwalzen unter hohem Druck faltenfrei fest angewalzt. Wurden die beiden Folien an einer Zugprüfmaschine im Winkel von 90° bei einer Geschwindigkeit von 300 mm/min auseinandergezogen, ergab sich eine Delaminierfestigkeit von 6,2 N/cm.

Die bereits geprimerte PET-Unterseite des Laminats wurde mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband delaminierte nach einigen Zentimetern beim Abziehen vom KTL-Blech ohne erkennbaren Anlaß. In einem Fall blieb ein kleines Stück Polyesterfolie auf dem Blech zurück, ohne daß es zum vollständigen Delaminieren kam. Der Lack blieb vollständig auf der Rückseite des Bandes haften.

### Vergleichsbeispiel 6

Eine 100 µm dicke Weich-PVC-Folienbahn wurde mit einer Nitrilkautschuk/Naturkautschuklösung geprimert und nach dem Trocknen mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Das beklebte Blech wurde dann in Anlehnung an harte Praxisbedingungen mit einem Füller beschichtet, der 40 min lang bei 170 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab, daß das Band, offenbar wegen zu großer Vordehnung bei der Applikation, unter Vergrößerung der Verklebungsradien leicht geschrumpft war, sich in einem Fall sogar in der Kurve aufgestellt hatte. Anschließend wurde das Band unter verschiedenen Abzugswinkeln zwischen 45° und 180° abgezogen. Das Klebeband ließ sich einwandfrei abziehen. Der Lackfilm auf der Rückseite des Bandes zerbrach zwar je nach Abzugswinkel in kleine Stücke, blieb aber vollständig haften. Im Falle der Verklebungskurve, wo das Band aufgestellt war, hatte die lackfreie Spur nur noch etwa 20 % der ursprünglich maskierten Breite.

## Patentansprüche

1. Einseitig mit einer Selbstklebemasse ausgerüstetes Klebeband, umfassend ein Trägermaterial aus einem Laminat aus Weich-PVC und Polyester, wobei das Laminat mit Hilfe eines Kaschierklebers auf Acrylsäurepolymerisatbasis hergestellt wird.

2. Klebeband nach Anspruch 1, dadurch gekennzeichnet, daß der Kaschierkleber auf einem Acrylsäureesterpolymerisat basiert, wobei als Monomere insbesondere n-Butylacrylat, t-Butytacrylat, 2-Ethylhexylacrylat, Methylacrylat und Acrylsäure verwendet werden und wobei gegebenenfalls Klebharze wie Kolophoniumderivate oder Terpenphenolharze zugesetzt werden.

3. Klebeband nach den Ansprüchen 1 und 2, dadurch gekennzeichnet, daß zwischen Trägermaterial und Selbstklebemasse ein Primer vorhanden ist.

4. Klebeband nach den Ansprüchen 1 bis 3, dadurch gekennzeichnet, daß auf der Rückseite des Trägermaterials ein Trennlack vorhanden ist, der gleichzeitig eine gute Füller- und Lackhaftung gewährleistet.

5. Klebeband nach den Ansprüchen 1 bis 4, dadurch gekennzeichnet, daß das Laminat durch Verwendung einer geprimerten, mit PVC heißsiegelfähigen Polyesterfolie und Weich-PVC durch thermische Siegelung hergestellt wird.

6. Klebeband nach zumindest einem der vorherigen Ansprüche, dadurch gekennzeichnet, daß die Selbstklebemasse die folgende Zusammensetzung aufweist:
Ethylen 10 bis 30, besonders bevorzugt 10 bis 15 Gew.-%
Vinylacetat 20 bis 55, besonders bevorzugt 30 bis 35 Gew.-%
Acrylsäureester 30 bis 69, besonders bevorzugt 50 bis 60 Gew.-%
Acrylsäureamid 0 bis 8, besonders bevorzugt 0,5 Gew.-%

7. Klebeband nach zumindest einem der vorherigen Ansprüche, dadurch gekennzeichnet, daß die Selbstklebemasse eine Dicke von 15 bis 40 µm aufweist.

8. Verwendung eines Klebebandes nach zumindest einem der vorherigen Ansprüche zur Fensterflanschmaskierung.
